(19) Europäisches Patentamt
European Patent Office
Office européen des brevets

(11) EP 1 124 919 B1

(12) # EUROPEAN PATENT SPECIFICATION

(45) Date of publication and mention of the grant of the patent: **13.07.2005 Bulletin 2005/28**

(21) Application number: **99953168.4**

(22) Date of filing: **13.10.1999**

(51) Int Cl.[7]: **C10M 133/52**, C10M 133/56, C08F 8/46 // (C10N30/00, 30:04, 40:25, 60:00)

(86) International application number: **PCT/US1999/023940**

(87) International publication number: **WO 2000/026327 (11.05.2000 Gazette 2000/19)**

(54) **IMPROVED DISPERSANT BY TREATMENT WITH MALEIC ANHYDRIDE**

MIT MALEINSÄUREANHDRID BEHANDELTES DISPERGIERMITTEL

DISPERSANT AMELIORE PAR TRAITEMENT A L'ANHYDRIDE DE L'ACIDE MALEIQUE

(84) Designated Contracting States: **AT BE CH CY DE DK ES FI FR GB GR IE IT LI LU MC NL PT SE**

(30) Priority: **30.10.1998 US 106320 P**
**21.09.1999 US 400689**

(43) Date of publication of application: **22.08.2001 Bulletin 2001/34**

(73) Proprietor: **The Lubrizol Corporation**
**Wickliffe, OH 44092-2298 (US)**

(72) Inventors:
- **ABRAHAM, William, D.**
  **South Euclid, OH 44121 (US)**
- **STACHEW, Carl, F.**
  **Portage, MI 49024 (US)**
- **LAMB, Gordon, D.**
  **Derby, Derbyshire DE3 5NW (GB)**
- **KOTZEN, Wolfie**
  **Mentor, OH 44060 (US)**
- **RAY, James, C.**
  **Mentor, OH 44060 (US)**

(74) Representative: **Crisp, David Norman et al**
**D Young & Co**
**120 Holborn**
**London EC1N 2DY (GB)**

(56) References cited:
**EP-A- 0 072 645**
**EP-A- 0 438 847**
**EP-A- 0 658 617**
**GB-A- 2 312 212**
**US-A- 4 234 435**
**US-A- 4 940 552**
**US-A- 5 466 387**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 124 919 B1

## Description

BACKGROUND OF THE INVENTION

The present invention relates to an improved process for preparing dispersants involving treatment with maleic anhydride.

Seals used in engines, gear assemblies, and automatic transmissions serve to isolate various lubrication environments from harmful elements, assist in maintaining hydraulic pressures, allow removal or replacement of malfunctioning parts without the requirement to totally dismantle the machinery, and minimize contamination and loss of lubricant. Seals are typically made of nitrile rubber, fluoroelastomers, silicones, or polyacrylates. The seals come in contact with the lubricant and may, under operating conditions, lose their elasticity and become brittle. Often the deterioration of seals is affected by the additives present in the lubricant. For instance, basic dispersants have a negative affect on fluoroelastomer seals. Such dispersants may cause elimination of hydrogen fluoride from the fluoroelastomer seals, which can lead to loss of elasticity and general deterioration. Accordingly, a need exists for improving lubricant compatibility with seals and thus extending the operating life, particularly of fluoroelastomer seals. Simultaneously, there is a need for the lubricant to perform well in its primary functions such as lubrication, dispersion of contaminants, and reduction of wear. Achieving both goals simultaneously has been a problem.

The modified dispersants prepared according to the present invention are suitable for use as additives for lubricating oil compositions, especially for heavy duty diesel engine applications. They are particularly useful as additives for compositions which must simultaneously exhibit excellent dispersant properties as well as improved performance in interaction with fluoropolymer seals, such as those prepared from Viton™ fluoroelastomers. The present dispersants also exhibit excellent concentrate compatibility and viscometrics. Improved viscometrics permits the use of reduced amounts of viscosity modifiers and the use of heavier base stocks in formulations which include the present dispersant. Moreover, the modified dispersants can be prepared in low chlorine formulations are therefore environmentally favored. "Low chlorine" formulations can be defined as those which contain less than 100 parts per million (by weight) of chlorine (in the finished lubricant). The present dispersants, when used at typical treatment rates of 7.2 weight percent, can contribute less than 100 p.p.m. chlorine to a composition, and in favorable conditions less than 75 p.p.m. chlorine.

Post treatment of dispersants is generally known. U.S. Patent 4,234,435, Meinhardt et al., November 18, 1980, discloses carboxylic acid acylating agents derived from polyalkenes and a dibasic, carboxylic reactant such as maleic or fumaric acid or certain derivatives thereof. The acylating agents can be reacted with a further reactant subject to being acylated such as polyethylene polyamines and polyols to produce derivatives useful as lubricant additives or as intermediates to be subjected to post-treatment with various other chemical compounds and compositions, such as epoxides, to produce still other derivatives useful as lubricant additives. Among the listed post-treating reagents are carboxylic acid acylating agents.

British patent application GB 2312212A, published October 22, 1997, discloses an oil soluble dispersant obtainable by reacting a polyalkenyl succinc acylating agent and N-(2-(4-morphinyl)ethyl)-1,2-ethane diamine, having less adverse effects upon fluoroelastomer seals. Commercially available premium dispersant-containing gasoline oils typically require the use of post-treated dispersants to meet the requirements. Polyalkene is reacted with an unsaturated acid to form the polyalkenyl succinic acylating agent, which is then reacted with N-(2-(4-morphinyl)ethyl)-1,2-ethane diamine.

U.S. Patent 5,466,387, Pianta et al., November 14, 1995, discloses an oil-soluble additive with dispersant properties inert towards fluoroelastomers, prepared by reacting (a) at least one alkyl or alkenyl disuccinimide having at least one basic nitrogen, with (b) at least one anhydride of an unsaturated bicarboxylic aliphatic acid or the corresponding acid, at a temperature of between 130° and 170°C., the molar ratio of anhydride to disuccinimide being between 1.2 and 1.6. The nitrogenated dispersants of disuccinimide type are made compatible with fluoroelastomers by a simple treatment. The term "disuccinimide" means succinimides prepared by reacting an alkyl (or alkenyl) succinic anhydride (or the relative bicarboxylic acid) with a polyamine in a molar ratio of between 2.0 and 2.5.

US Patent 4 940 552 describes the post-treatment of a Mannich polyamine dispersant with maleic anhydride. The treatment is described as reducing the reactivity of the dispersant towards fluorohydrocarbon compositions. Similarly, EP-A-0 658 617 describes post-treatment of dispersants prepared by reacting an alkyl or alkenyl succinic acylating agent and an alkoxylated diethylene triamine, with a dicarboxylic acylating agent such as maleic anhydride.

US Patent 4,686,054, Wisotsky et al., August 11, 1987, discloses a lubricating oil composition exhibiting improved dispersancy, comprising a major amount of lubricating oil and 0.5 to 10 weight percent of a dispersant prepared in a sequential process comprising the steps of:

(a) in a first step reacting an oil-soluble polyolefin succinic anhydride, the olefin being a $C_3$ or $C_4$ olefin, and an alkylene polyamine of the formula $H_2N(CH_2)_n(NH(CH_2)_n)_m-NH_2$, where n is 2 or 3 and m is 0 to 10, in a molar ratio of about 1.0 to 2.2 moles of polyolefin succinic anhydride per mole of polyamine; and

(b) reacting the product of step (a) with a dicarboxylic acid anhydride selected from the group consisting of maleic anhydride and succinic anhydride in sufficient molar proportions to provide a total mole ratio of about 2.3 to 3.0 moles of anhydride compounds per mole of polyamine. The mole ratios are relatively narrow and critical; the reaction sequence is particularly critical.

European Patent EP 438 847 B, November 9, 1994, discloses a dispersant prepared by a process which comprises (i) reacting at least one polyamine with at least one acyclic hydrocarbyl substituted succinic acylating agent in which the substituent contains an average of at least 70 carbon atoms, and (ii) reacting the product so formed with an aliphatic vicinal dicarboxylic acylating agent selected from maleic anhydride (among others), the process characterized in that in step (i) the acylating agent is reacted with the polyamine in a mole ratio of from 1.05 to 2.85 moles of acylating agent per mole of polyamine,
in that in step (ii) the vicinal dicarboxylic acylating agent is employed in an amount sufficient to provide a total mole ratio of 3.05 to 4.5 moles of acylating agents per mole of polyamine, and
in that the reagents are employed in relative proportions such that the molar ratio of acylating agent(s) in (i): acylating agent(s) in (ii) is at least 1.45:1.

U.S. Patent 3,374,174, LeSuer, March 19, 1968 discloses lubricant additives prepared by forming an acylated amine intermediate and subsequently reacting it with a dicarboxylic acid reactant.

European Patent EP 72 645 B, January 7, 1987, discloses a dispersant prepared by reacting a polyolefin (based on a C3 or C4 olefin) - succinic anhydride with an alkylene polyamine, then reacting with a dicarboxylic anhydride, in specific mole ratios. The polyolefin can be polyisobutylene.

## SUMMARY OF THE INVENTION

The present invention provides a process for preparing a dispersant comprising reacting:

(a) an amine;
(b) a hydrocarbyl-substituted acylating agent; and
(c) maleic anhydride;

wherein the amine and hydrocarbyl-substituted acylating agent are present in such amounts that a reaction product thereof, in the absence of component (c), would contain residual reactive nitrogen functionality;

wherein the amount of component (c) is sufficient to react with at least a portion of said residual reactive nitrogen functionality; and

wherein the maleic anhydride is added to the reaction mixture at a temperature of less than 140°C and is supplied so as to react simultaneously with the reaction of the amine and the hydrocarbyl acylating agent to form the dispersant.

The dispersants prepared in accordance with the present invention can be used in lubricant compositions comprising a major amount of an oil of lubricating viscosity and a minor amount of any of the aforedescribed dispersants.

The dispersants can also be used in concentrates comprising any of the aforedescribed dispersants and a concentrate-forming amount of an oil of lubricating viscosity.

The dispersants can be used in a method for lubricating a device having at least one fluoroelastomer component in contact with lubricant, said method comprising supplying to said device any of the previously described lubricants.

## DETAILED DES CRIPTION OF THE INVENTION

Various preferred features and embodiments will be described below by way of non-limiting illustration.

The methods for preparing succinimide dispersants are well known. Typical procedures for preparation of the dispersants of the present invention (lacking, however, the feature of reaction with the $\alpha,\beta$-unsaturated acid or equivalent such as maleic anhydride) are those described in U.S. Patent 4,234,435, Meinhardt et al., with specific reference to the Examples thereof.

The present invention is particularly useful for treatment of dispersants of the above type which are considered to be basic dispersants, that is, having a Total Base Number (TBN) of at least 40, preferably at least 50, and more preferably at least 60 or more, as determined on an oil-free basis, that is correcting for the presence of any diluent oil. TBN refers to the amount of acid (perchloric or hydrochloric) needed to neutralize all of the basicity of one gram of a material, expressed as the corresponding amount (in mg) of KOH. Such basic dispersants typically have a nitrogen content of at least 2%, 2.5%, or 3.5% on an oil-free basis. However, the invention is also useful for treatment of dispersants having a lower TBN such as 30, 20, 15, or even 10.

The dispersants include acylated amines, that is, a reaction product of one or more hydrocarbyl substituted carboxylic acylating agents and one or more amines characterized by the presence within its structure of at least one >N-H group. The acylated amines are prepared in a well-known manner by reacting preferably a stoichiometric excess of amine with a hydrocarbyl-substituted carboxylic acylating agent. That is, preferably greater than 1 equivalent of amine is reacted with each equivalent of carboxylic acid of the acylating agent. In preferred embodiments, at least 1.2 or 1.4 equivalents, and up to 8, preferably 7, 6, 4, or 2 equivalents of amine are reacted with each equivalent of carboxylic group of the acylating agent. In another preferred embodiment, 1.0 to 1.5 equivalents of amine are

reacted with each equivalent of carboxylic acid of the acylating agent. In this context, an equivalent of amine is that amount of amine corresponding to the total weight of amine divided by the total number of nitrogen atoms present. (The number of carboxylic groups of the maleic anhydride component, described below, are not included in the above calculation.)

The acylating agents used to prepare the dispersants are hydrocarbyl-substituted acylating agents. The hydrocarbyl group thereof generally has a number average molecular weight of at least 600, 700, or 800, to 5000, 3000, 2500, 1600, 1300, or 1200. The hydrocarbyl group can be derived from a polyalkene, including homopolymers and interpolymers of olefin monomers having 2 to 16, to 6, or to 4 carbon atoms, and mixtures thereof. In a preferred embodiment the polyalkene is polyisobutene. Such polyalkenes are prepared by conventional procedures.

The hydrocarbyl-substituted carboxylic acylating agents are prepared by the reaction of one or more of the above-described polyalkenes with one or more unsaturated carboxylic reagents. The unsaturated carboxylic reagents include unsaturated carboxylic acids per se and functional derivatives thereof, such as anhydrides, esters, amides, imides, salts, acyl halides, and nitriles. The unsaturated carboxylic reagents include mono-, di-, tri, or tetracarboxylic acids. Examples of useful unsaturated monobasic acids include acrylic acid, methacrylic acid, cinnamic acid, crotonic acid, and 2-phenylpropenoic acid. Polybasic unsaturated carboxylic acids include maleic acid, fumaric acid, mesaconic acid, itaconic acid, and citraconic acid; their anhydrides are preferred and maleic anhydride is particularly preferred.

The acylating agents can be prepared by reacting one or more of the polyalkenes with preferably a stoichiometric excess of a carboxylic acylating reagent such as maleic anhydride. Such reaction provides a substituted carboxylic acylating agent wherein the number of succinic groups, for each equivalent weight of the hydrocarbyl group, is preferably at least 1.3, preferably at least 1.4 or 1.5, and, for instance, up to 10, 5, 4.5, 3.5, or 2. That is, such acylating agents is characterized by the presence of preferably at least 1.3 succinic groups for each equivalent weight of substituent group. For purposes of this calculation, the number of equivalent weight of substituent groups is deemed to be the number corresponding to the quotient obtained by dividing the $\bar{M}_n$ (number average molecular weight) value of the polyalkene from which the substituent is derived into the total weight of the substituent groups present in the substituted succinic acylating agent. Thus, if a substituted succinic acylating agent is characterized by a total weight of substituent group of 40,000 and the $\bar{M}_n$ value for the polyalkene from which the substituent groups are derived is 2000, then that substituted succinic acylating agent is characterized by a total of 20 (40,000/2000 = 20) equivalent weights of substituent groups. Therefore, that particular succinic acylating agent would also be characterized by the presence within its structure of at least 26 succinic groups.

It is also preferred that the substituted succinic acylating agents used for this invention have been derived from a polyalkene characterized by a $\bar{M}_w/\bar{M}_n$ value of 1 to 4, more preferably 1.5 to 3.5 or 3, where $\bar{M}_w$ is weight average molecular weight.

The presence of succinic groups at the above-specified level, and the above-specified $\bar{M}_w/\bar{M}_n$ ratio, is believed to result in improved performance of the resulting dispersant. These features, and methods for preparing succinic acylating agents satisfying these parameters, are fully described in U.S. patent 4,234,435. In particular, this patent discloses (in column 19) a process for preparing such materials by heating at a temperature of about 160°C to about 220°C a mixture comprising:

(A) Polybutene characterized by a $\bar{M}_n$ value of about 1700 to about 2400 and a $\bar{M}_w/\bar{M}_n$ value of about 2.5 to about 3. 2, in which at least 50% of the total units derived from butenes is derived from isobutene,

(B) One or more acidic reactants of the formula

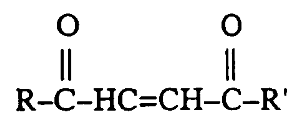

wherein R and R' are each -OH or when taken together, R and R' are -O-, and

(C) Chlorine.

Specific examples of preparation of such acylating agents are set forth in Examples 1 through 9 of U. S. Patent 4,234,435. Similar examples can be found in U.S. Patents 3,215,707, 3,219,666, and 3,231,587. Other processes can be used, if desired, which do not employ chlorine. Bromine can be used in place of chlorine; or the reactants can be merely heated together at 150 to 200 or 230°C. Preparation using a so-called "thermal" route is described in European Patent 355,895. While chlorination normally helps increase the reactivity of polyolefins with monounsaturated carboxylic reactants, it is not necessary, especially for those polymers which have a high terminal bond content and associated reactivity. For such materials the polymer and the acidic reactant (B) are preferably contacted at elevated temperatures to effect a thermal "ene" reaction, as described for instance in U.S. Patents 3,361,637 and 3,401,118.

It is also possible that the acylating agent can be prepared in such a way that the number of succinic groups for each equivalent of the hydrocarbyl group is less than or equal to 1.3, e.g., 1.0 to 1.3. In that case the reaction of the acylating agent with amine and with

the maleic anhydride will be conducted simultaneously during the synthesis of the dispersant, as described below.

The amines used to prepare the dispersants can be polyamines as disclosed in U.S. Patent 4,234,435 at column 21, line 4 to column 27, line 50. They may also be heterocyclic polyamines or alkylenepolyamines. Alkylenepolyamines are represented by the formula $H(R^1)N\text{-}(Alkylene\text{-}N(R^1))_nR^1$, where each $R^1$ is independently hydrogen or an aliphatic group or a hydroxy-substituted aliphatic group; n is 1 to 10, 2 to 7, or 2 to 5, and the "Alkylene" group has 1 to 10, or 2 to 6, or 2 to 4 carbon atoms. Specific examples of such polyamines are the ethyleneamines and polyethyleneamines, such as ethylenediamine, triethylenetetramine, triethylenetetramine, tetraethylenepentamine, pentaethylenehexamine and mixtures thereof, including complex commercial mixtures which include cyclic condensation products. Such materials are described in detail under the heading "Ethylene Amines" in Kirk Othmer's *Encyclopedia of Chemical Technology,* 2d Edition, Vol. 7, pages 22-37, Interscience Publishers, New York, 1965. Other amine mixtures include "polyamine bottoms" which is the residue resulting from stripping of the above-described polyamine mixture. In another embodiment, the polyamine can be a condensed polyamine resulting from the condensation reaction of at least one hydroxy compound with at least one polyamine reactant containing at least one primary or secondary amino group. Such condensates are described in U.S. Patent 5,230,714.

The preparation of a dispersant is generally known and illustrated by the following Example

Example D-1

A mixture is prepared by the addition of 1000 parts by weight of polyisobutenyl (number average molecular weight 2000) succinic anhydride (having greater than 1.3 succinic groups per molecule, on average) to 1050 parts of mineral oil and is heated to 110°C. Added evenly to this mixture over a 1 hour period is 71.3 parts of a commercial heavy ethylenepolyamine mixture corresponding predominantly to tetraethylenepentamine ("TEPA," 5-15%), pentaethylenehexamine ("PEHA," 30-40%) and heavy amines above PEHA (55-65%), while maintaining the temperature at 110 to 120°C. The mixture is then heated to 155-160°C and nitrogen blown for 1 hour. The reaction mixture is filtered to yield an oil containing 50% of the desired acylated amine having a TBN of 28 and 1.2% nitrogen, based on the solution in oil, or a TBN of 56 and 2.4% nitrogen, based on the dispersant on an oil-free basis.

In the process of the invention the dispersant is prepared by co-reacting maleic anhydride with the components of the dispersant during its preparation.

The present invention thus provides for treatment or reaction of the components of the dispersant during synthesis with maleic anhydride in order to provide a dispersant of excellent dispersant properties and a reduced or eliminated tendency to cause deterioration of fluoro-elastomer seals.

The suitable amount of maleic anhydride which should be reacted will depend on the specific dispersant and on the number of equivalents of reactive nitrogen functionality contained therein.. The number of equivalents of reactive nitrogen functionality in a dispersant sample can be determined by evaluating TBN of the dispersant. For example, a certain dispersant may be characterized as a 25 TBN dispersant. Its equivalent weight, as calculated from the TBN is 56,100/25 = 2244 g (where 56,100 is the number of mg per equivalent of KOH). For purposes of the present invention, maleic anhydride is assumed to have three reaction sites: two from the anhydride portion and one from the olefinic double bond, since it is believed that reaction can occur both by condensation with the carbonyl portions and by reaction across the double bond. Generally 0.01 to 0.5 moles (that is, 0.03 to 1.5 equivalents (in the equivalent weight sense)) of maleic anhydride will be reacted per mole of reactive (basic) nitrogen atoms remaining in the amine portion of the dispersant, as determined by TBN, preferably 0.03 to 0.4 moles maleic anhydride, and still more preferably 0.05 to 0.3 moles maleic anhydride. Thus, as an illustration, 400 grams of a 25 TBN dispersant will contain 400/2244 = 0.18 moles of reactive nitrogen atoms, where 2244 is the equivalent weight as calculated above. This amount of dispersant can preferably be reacted with from 0.18 x 0.01 = 1.8 millimoles, to, 0.18 x 0.5 = 90 millimoles, that is, 0.088 to 8.8 g; of maleic anhydride. More typically, 400 g of such a dispersant would be reacted with 9 to 54 mmol, i.e., about 20 mmol of maleic anhydride, which corresponds to 0.88 g to 5.3 g, i.e., about 2 g maleic anhydride.

In certain preferred embodiments the dispersants the ratio, of total moles of amine nitrogen atoms in the amine (a) to moles of carboxyl groups in the acylating agent (b), as charged to the reaction mixture forming said dispersant, is 1.3 to 2.3, preferably 1.4 to 2; and the ratio of moles of anhydride (c) charged to the reaction mixture to moles of reactive (basic) nitrogen atoms remaining in the amine (b) upon reaction with (a), as determined by measuring or calculating the TBN of a corresponding reaction product of (a) and (b) in the absence of component (c), is 0.1 to 0.4, preferably 0.1 or 0.12 to 0.25. Such dispersants are particularly suitable for use in lubricants designed for heavy-duty diesel engines in which control of soot can be important.

In other preferred embodiments the dispersants the ratio of total moles of amine nitrogen atoms in the amine (a) to moles of carboxyl groups in the acylating agent (b), as charged to the reaction mixture forming said dispersant, is 1.0 to 1.3; and the ratio of moles of anhydride (c) charged to the reaction mixture to moles of reactive nitrogen atoms remaining in the amine (b) upon reaction with (a), as determined by, measuring or

calculating the TBN of a corresponding reaction product of (a) and (b) in the absence of component (c), is 0.05 to 0.2. Such dispersants are particularly suitable for use in lubricants designed for passenger car engines.

The components of the dispersant can be reacted with maleic anhydride by any of a variety of methods. The reaction is conducted during synthesis of the dispersant. The amount of maleic anhydride is calculated based on the TBN of the dispersant which would be produced in the absence of

the maleic anhydride, which can be readily determined by conducting such a reaction in the absence of maleic anhydride. The reaction, moreover, can be conducted by batch or by continuous reaction methods.

In one embodiment, the reaction is conducted in a batch process. In an example, diluent oil and hydrocarbyl-substituted succinic anhydride are mixed in a reactor and heated to 105-115°C. The desired amount of polyamine reactant is added slowly, to control the heat generated by the exothermic reaction, such that the temperature of the mixture does not exceed about 115-125°C, or 120 to 121°C. The desired amount of maleic anhydride is added to the reaction and the mixture is heated to 140-160°C, or 145-155°C, or about 152°C over a period of 2 to 10 hours or 4 to 6 hours, with removal of water of condensation to less than 0.3 weight % of the mixture. Thereafter the mixture is cooled to 130-140°C and is filtered.

In a variation of the batch process, the maleic anhydride is added to the reactor prior to the addition of the polyamine.

In another embodiment, the reaction can be conducted continuously. The continuous process can be conducted in a two continuous stirred tank reactor (CSTR) system. In one embodiment, hydrocarbyl-substituted succinic anhydride and diluent oil are premixed using an in-line blender and fed to the first CSTR. The polyamine and the maleic anhydride are added continuously to the first CSTR. In a variation thereof, the hydrocarbyl-substituted succinic anhydride, diluent oil, and maleic anhydride are pre-mixed and fed to the first CSTR; the polyamine is added as a separate streim. In either case, the first CSTR is maintained at approximately 100-120°C. The residence time in the first CSTR is 1 to 5 hours, preferably 2 to 4 hours, more preferably about 3 hours. Reaction material from the first CSTR flows continuously to the second CSTR, which operates at 140-160°C. The residence time in the second CSTR is 1/2 to 2 hours, preferably about 1 hour. From each reactor, water from the condensation reaction is removed by sub-surface nitrogen blowing. The crude product from the second CSTR is filtered and an appropriate amount of diluent oil may be added, if desired. anhydride should be added and permitted to react at temperatures below 140°C, preferably below 130°C, and more preferably below 125°C. particularly if water is present.

Example 1

Into the first of a series of two continuous stirred tank reactors is charged a preblended mixture of hydrocarbyl-substituted succinic anhydride, molecular weight 2137, containing on average about 1.43 succinic anhydride groups per molecule (about 50 weight %); diluent oil (about 50 weight %); and maleic anhydride (about 0.44 weight %, based on the total weight of dispersant prepared including oil). The first CSTR is maintained at a target temperature of 110°C while a heavy commercial polyalkylene amine as in Example D-1, containing 34% nitrogen is charged. The amount of amine charged is such that the ratio of CO groups from the hydrocarbyl-substituted succinic anhydride to N atoms of the amine is 1:1.3. The residence time of the first CSTR is 3 hours. Reaction material from the first CSTR continuously flows to the second CSTR, which operates at a target temperature of 152°C. The residence time in the second CSTR is 1 hour. The water of condensation from each reactor is removed by sub-surface blowing with nitrogen. The unadjusted product from the second CSTR is conducted to a batch filtration system for filtration and adjustment to the desired level of diluent oil.

Example 2

In a batch process, diluent oil (1060 parts by weight) and the hydrocarbyl-substituted succinic anhydride from Example 1 (1000 parts by weight) are charged to a stirred tank reactor and heated to 110°C. Once at this temperature, the polyamine as described in Example 1 (72.5 parts by weight) is added to the reaction over a period of about 1 hour, at a rate sufficiently slow to maintain the temperature below 121°C. Immediately after addition of the polyamine is complete, maleic anhydride (9.25 parts by weight) is added, and thereafter the mixture is heated to 152°C over 5 hours. One hour after this heating is begun, a sub-line nitrogen purge is begun to facilitate removal of water. Upon reaching 152°C the batch is sampled to determine the water content by ASTM D-95. Once the water content is verified to be below 0.3 weight percent, the batch is cooled to 135°C, whereupon filter aid (2.1 parts by weight) is added and the resulting mixture is filtered.

Example 3

Example 2 is substantially repeated, except that the maleic anhydride is added along with the hydrocarbyl-substituted succinic anhydride in the initial charge. Specifically, in a batch process, diluent oil (1048 parts by weight) and hydrocarbyl succinic anhydride, molecular weight 2128, containing an average 1.5 succinic anhydride groups per molecule, are charged to a batch reactor and heated to 110°C. Once at this temperature, maleic anhydride (8.404 pbw) is added. The batch is mixed for 30 minutes, then the polyamine (60.4

pbw) is added over a period of one hour. During the polyamine charge, the batch temperature is controlled between 110°C and 121°C. The batch is then heated to 152°C over a period of five hours. One hour into the five hour heat up, a sub-surface nitrogen purge is started to aid in the removal of water of reaction. Once at 152°C, the batch is tested to assure adequate removal of water of reaction and then filtered to satisfactory clarity. The product is a clear brown oil.

The dispersants prepared by the present invention are typically combined with an oil of lubricating viscosity and optionally other conventional components to provide a concentrate or a lubricant formulation. When a concentrate is desired, a concentrate-forming amount of oil or other diluent is used, typically 5 to 80 percent oil, preferably 10 to 70 percent oil or 20 to 50 percent oil, together with a complementary amount of the dispersant and optionally other additives. When a lubricant formulation is desired, a major amount of oil is generally used, that is, at least about 50 percent and preferably more than 50 percent by weight. Typical or preferred amounts of oil include 60 or 70 or 80 percent by weight, to 99, 95, or 90 percent by weight. The balance is the dispersant and optionally other additives.

The oil of lubncating viscosity can be any of a diverse group of materials, including natural and synthetic lubricating oils and mixtures thereof. These lubricants include crankcase lubricating oils for spark-ignited and compression-ignited internal combustion engines, including automobile and truck engines, two-cycle engines, aviation piston engines, marine and railroad diesel engines, and the like. They can also be used in gas engines, stationary power engines and turbines and the like. Automatic or manual transmission fluids, transaxle lubricants, gear lubricants, including open and enclosed gear lubricants, tractor lubricants, metal-working lubricants, hydraulic fluids and other lubricating oil and grease compositions can also benefit from the incorporation therein of the compositions of the present invention. They may also be used as wirerope, walking cam, way, rock drill, chain and conveyor belt, worm gear, bearing, and rail and flange lubricants.

As described above, the lubricating composition contains an oil of lubricating viscosity. The oils of lubricating viscosity include natural or synthetic lubricating oils and mixtures thereof. Natural oils include animal oils, mineral lubricating oils, and solvent or acid treated mineral oils. Synthetic lubricating oils include hydrocarbon oils (polyalpha-olefins), halo-substituted hydrocarbon oils, alkylene oxide polymers, esters of dicarboxylic acids and polyols, esters of phosphorus-containing acids, polymeric tetrahydrofurans and silicon-based oils. Preferably, the oil of lubricating viscosity is a hydro-treated mineral oil or a synthetic lubricating oil, such as a polyolefin. Examples of useful oils of lubricating viscosity include XHVI basestocks, such as 100N isomerized wax basestock (0.01% sulfur/ 141 VI), 120N isomerized wax basestock (0.01% sulfur/ 149 VI), 170N isomerized wax basestock (0.01% sulfur/ 142 VI), and 250N isomerized wax basestock (0.01% sulfur/ 146 VI); refined basestocks, such as 250N solvent refined paraffinic mineral oil (0.16% sulfur/89 VI), 200N solvent refined naphthenic mineral oil (0.2% sulfur/ 60 VI), 100N solvent refined/ hydro-treated paraffinic mineral oil (0.01% sulfur/98 VI), 240N solvent refined/ hydro-treated paraffinic mineral oil (0.01% sulfur/ 98 VI), 80N solvent refined/ hydro-treated paraffinic mineral oil (0.08% sulfur/ 127 VI), and 150N solvent refined/ hydro-treated paraffinic mineral oil (0.17% sulfur/127 VI). A description of oils of lubricating viscosity occurs in U.S. Patent 4,582,618 (column 2, line 37 through column 3, line 63, inclusive).

In one embodiment, the oil of lubricating viscosity is a polyalpha-olefin (PAO). Typically, the polyalpha-olefins are derived from monomers having from about 4 to about 30, or from about 4 to about 20, or from about 6 to about 16 carbon atoms. Examples of useful PAOs include those derived from decene. These PAOs may have a viscosity from about 3 to about 150, or from about 4 to about 100, or from about 4 to about 8 $x10^{-6}$ $m^2/s$ (cSt) at 100°C. Examples of PAOs include 4 $x10^{-6}$ $m^2/s$ (cSt) polyolefins, 6 $x10^{-6}$ $m^2/s$ (cSt) polyolefins, 40 $x10^{-6}$ $m^2/s$ (cSt) polyolefins and 100 $x10^{-6}$ $m^2/s$ (cSt) polyalphaolefins.

In one embodiment, the lubricating composition contains an oil of lubricating viscosity which has an iodine value of less than about 9. Iodine value is determined according to ASTM D-460. In one embodiment, the oil of lubricating viscosity has a iodine value less than about 8, or less than about 6, or less than about 4.

In one embodiment, the oil of lubricating viscosity are selected to provide lubricating compositions with a kinematic viscosity of at least about 3.5 $x10^{-6}$ $m^2/s$ (cSt), or at least about 4.0 $x10^{-6}$ $m^2/s$ (cSt) at 100°C. In one embodiment, the lubricating compositions have an SAE gear viscosity grade of at least about SAE 75W. The lubricating composition may also have a so-called multigrade rating such as SAE 75W-80, 75W-90, 75W-140, 80W-90, 80W-140, 85W-90, or 85W-140. Multigrade lubricants may include a viscosity improver which is formulated with the oil of lubricating viscosity to provide the above lubricant grades. Useful viscosity improvers include but are not limited to polyolefins, such as ethylene-propylene copolymers, or polybutylene rubbers, including hydrogenated rubbers, such as styrene-butadiene or styrene-isoprene rubbers; or polyacrylates, including polymethacrylates. In one embodiment, the viscosity improver is a polyolefin or polymethacrylate. Viscosity improvers available commercially include Acryloid™ viscosity improvers available from Rohm & Haas; Shellvis™ rubbers available from Shell Chemical; Trilene™ polymers, such as Trilene™ CP-40, available commercially from Uniroyal Chemical Co., and Lubrizol® 3100 series and 8400 series polymers, such as Lubrizol® 3174 available from The Lubrizol Corporation.

In one embodiment, the oil of lubricating viscosity includes at least one ester of a dicarboxylic acid. Typically the esters containing from about 4 to about 30, preferably from about 6 to about 24, or from about 7 to about 18 carbon atoms in each ester group. Here, as well as elsewhere, in the specification and claims, the range and ratio limits may be combined. Examples of dicarboxylic acids include glutaric, adipic, pimelic, suberic, azelaic and sebacic. Example of ester groups include hexyl, octyl, decyl, and dodecyl ester groups. The ester groups include linear as well as branched ester groups such as iso arrangements of the ester group. A particularly useful ester of a dicarboxylic acid is diisodecyl azelate.

Other additives or agents which can be employed in compositions with the dispersants include antioxidants, corrosion inhibitors, extreme pressure and anti-wear agents, which include but are not limited to chlorinated aliphatic hydrocarbons; boron-containing compounds including borate esters; and molybdenum compounds.

Detergents can also be included. Detergents are typically basic alkali or alkaline earth metal salts of an acidic organic compound. These salts can be overbased materials. Overbased materials are single phase, homogeneous Newtonian systems characterized by a metal content in excess of that which would be present according to the stoichiometry of the metal and the particular acidic organic compound reacted with the metal. Overbased detergents are well known and they and methods of synthesis of overbased sulfonic acids, carboxylic acids, and others have been described in detail in numerous references, including U.S. Patents 2,501,731; 2,616,905; 2,616,911; 2,616,925; 2,777,874; 3,256,186; 3,384,585; 3,365,396; 3,320,162; 3,318,809; 3,488,284; and 3,629,109.

Viscosity improvers, described above, include but are not limited to polyisobutenes, polymethyacrylate acid esters, polyacrylate acid esters, diene polymers, polyalkyl styrenes, alkenyl aryl conjugated diene copolymers, polyolefins and multifunctional viscosity improvers.

Pour point depressants are a particularly useful type of additive sometimes included in the lubricating oils described herein. See for example, page 8 of "Lubricant Additives" by C. V. Smalheer and R. Kennedy Smith (Lesius-Hiles Company Publishers, Cleveland, Ohio, 1967).

Anti-foam agents used to reduce or prevent the formation of stable foam include silicones or organic polymers. Examples of these and additional anti-foam compositions are described in "Foam Control Agents", by Henry T. Kerner (Noyes Data Corporation, 1976), pages 125-162.

These and other additives are described in greater detail in U.S. Patent 4,582,618 (column 14, line 52 through column 17, line 16, inclusive).

Dispersants prepared according to the process of the present invention have use in many applications for providing improved properties when in contact with fluoroelastomer seals. Under certain conditions lubricating compositions containing the dispersants also exhibit improved viscometrics and good low temperature performance, and may permit use of reduced amounts of viscosity modifiers. The dispersant may also provide advantages such as improved fuel economy and compatibility of components and reduction of deposits, the latter especially in heavy duty diesel engines. Lubricants prepared using the dispersants can be generally used in a variety of applications including lubrication of heavy duty diesel engines and other engines, including use as passenger car motor oils.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

(1) hydrocarbon substituents, that is, aliphatic (e.g., alkyl or alkenyl), alicyclic (e.g., cycloalkyl; cycloalkenyl) substituents, and aromatic-, aliphatic-, and alicyclic-substituted aromatic substituents, as well as cyclic substituents wherein the ring is completed through another portion of the molecule (e.g., two substituents together form a ring);

(2) substituted hydrocarbon substituents, that is, substituents containing non-hydrocarbon groups which, in the context of this invention, do not alter the predominantly hydrocarbon substituent (e.g., halo (especially chloro and fluoro), hydroxy, alkoxy, mercapto, alkylmercapto, nitro, nitroso, and sulfoxy);

(3) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, preferably no more than one, non-hydrocarbon substituent will be present for every ten carbon atoms in the hydrocarbyl group; typically, there will be no non-hydrocarbon substituents in the hydrocarbyl group.

It is known that some of the materials described above may interact in the final formulation, so that the components of the final formulation may be different from those that are initially added. For instance, metal ions (of, e.g., a detergent) can migrate to other acidic sites of other molecules. The products formed thereby, including the products formed upon employing the composition of the present invention in its intended use, may not susceptible of easy description. Nevertheless, all such modifications and reaction products are

included within the scope of the present invention; the present invention encompasses the composition prepared by admixing the components described above.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil which may be customarily present in the commercial material, unless otherwise indicated. It is to be understood that the upper and lower amount, range, and ratio limits set forth herein may be independently combined.

**Claims**

**1.** A process for preparing a dispersant comprising reacting:

(a) an amine;
(b) a hydrocarbyl-substituted acylating agent; and
(c) maleic anhydride;

wherein the amine and hydrocarbyl-substituted acylating agent are present in such amounts that a reaction product thereof, in the absence of component (c), would contain residual reactive nitrogen functionality;
wherein the amount of component (c) is sufficient to react with at least a portion of said residual reactive nitrogen functionality; and
wherein the maleic anhydride is added to the reaction mixture at a temperature of less than 140°C and is supplied so as to react simultaneously with the reaction of the amine and the hydrocarbyl acylating agent to form the dispersant.

**2.** The process of claim 1 wherein the dispersant is a succinimide dispersant.

**3.** The process of claim 2 wherein the succinimide dispersant is **characterized by** the presence of 1.3 to 10 succinic groups for each equivalent weight of substituent group.

**4.** The process of any of the preceding claims wherein the acylating agent used to prepare the dispersant is derived from a polyalkene **characterized by** a $M_w/M_n$ value of 1 to 4.

**5.** The process of any of the preceding claims wherein the amine is a polyamine.

**6.** The process of any of the preceding claims wherein 0.01 to 0.5 moles of maleic anhydride are reacted per equivalent of dispersant.

**7.** The process of claim 1 wherein:

the ratio of total moles of amine nitrogen atoms in the amine (a) to moles of carboxyl groups in the acylating agent (b), as charged to the reaction mixture forming said dispersant, is 1.0 to 1.3; and
the ratio of moles of anhydride (c) charged to the reaction mixture to moles of reactive nitrogen atoms remaining in the amine (b) upon reaction with (a), as determined by TBN of a corresponding reaction product of (a) and (b) in the absence of component (c), is 0.05 to 0.2.

**8.** The process of claim 1 wherein:

the ratio of total moles of amine nitrogen atoms in the amine (a) to moles of carboxyl groups in the acylating agent (b), as charged to the reaction mixture forming said dispersant, is 1.3 to 2.3; and
the ratio of moles of anhydride (c) charged to the reaction mixture to moles of reactive nitrogen atoms remaining in the amine (b) upon reaction with (a), as determined by TBN of a corresponding reaction product of (a) and (b) in the absence of component (c), is 0.1 to 0.4.

**Patentansprüche**

**1.** Verfahren zum Herstellen eines Dispergiermittels, das ein Umsetzen:

(a) eines Amins,
(b) eines Hydrocarbyl-substituierten Acylierungsmittels und
(c) von Maleinsäureanhydrid

umfasst, wobei das Amin und das Hydrocarbyl-substituierte Acylierungsmittel in solchen Mengen vorhanden sind, dass ein Reaktionsprodukt davon bei Fehlen der Komponente (c) eine restliche reaktive Strckstofffunktionalität enthalten würde,
wobei die Menge an Komponente (c) ausreichend ist, um sich mit mindestens einem Teil der restlichen reaktiven Stickstofffunktionalität umzusetzen, und
wobei das Maleinsäureanhydrid zu dem Reaktionsgemisch bei einer Temperatur von weniger als 140°C gegeben wird und zugeführt wird, um sich gleichzeitig mit der Umsetzung des Amins und des Hydrocarbyl-Acylierungsmittels umzusetzen, um das Dispergiermittel zu bilden.

**2.** Verfahren nach Anspruch 1, wobei das Dispergiermittel ein Succinimid-Dispergiermittel ist.

**3.** Verfahren nach Anspruch 2, wobei das Succinimid-Dispergiermittel durch das Vorhandensein von 1,3 bis 10 Bernsteinsäuregruppen für jedes Äquivalentgewicht an Substituentengruppe charakterisiert ist.

**4.** Verfahren nach einem der vorstehenden Ansprüche, wobei das Acylierungsmittel, das zum Herstellen des Dispergiermittels verwendet wird, von einem Polyalken abstammt, das durch einen $M_w/M_n$-Wert von 1 bis 4 charakterisiert ist.

**5.** Verfahren nach einem der vorstehenden Ansprüche, wobei das Amin ein Polyamin ist.

**6.** Verfahren nach einem der vorstehenden Ansprüche, wobei 0,01 bis 0,5 mol Maleinsäureanhydrid pro Äquivalent an Dispergiermittel umgesetzt werden.

**7.** Verfahren nach Anspruch 1, wobei:

das Verhältnis von Gesamtmolen an Aminstickstoffatomen in dem Amin (a) zu Molen an Carboxylgruppen in dem Acylierungsmittel (b), wie zu dem Reaktionsgemisch gegeben, das das Dispergiermittel bildet, 1,0 bis 1,3 beträgt, und

das Verhältnis von zu dem Reaktionsgemisch gegebenen Molen an Anhydrid (c) zu Molen an reaktiven Stickstoffatomen, die in dem Amin (b) nach Umsetzen mit (a) verbleiben, wie durch den TBN-Wert eines entsprechenden Reaktionsprodukts von (a) und (b) ohne Komponente (c) bestimmt, 0,05 bis 0,2 beträgt.

**8.** Verfahren nach Anspruch 1, wobei:

das Verhältnis von Gesamtmolen an Aminstickstoffatomen in dem Amin (a) zu Molen an Carboxylgruppen in dem Acylierungsmittel (b), wie zu dem Reaktionsgemisch gegeben, das das Dispergiermittel bildet, 1,3 bis 2,3 beträgt, und

das Verhältnis von zu dem Reaktionsgemisch gegebenen Molen an Anhydrid (c) zu Molen an reaktiven Stickstoffatomen, die in dem Amin (b) nach Umsetzen mit (a) verbleiben, wie durch den TBN-Wert eines entsprechenden Reaktionsprodukts von (a) und (b) ohne Komponente (c) bestimmt, 0,1 bis 0,4 beträgt.

## Revendications

**1.** Procédé de préparation d'un dispersant comprenant la mise en réaction :

(a) d'une amine ;

(b) d'un agent acylant substitué par un groupe hydrocarbyle ; et

(c) d'un anhydride de l'acide maléique ;

dans lequel l'amine et l'agent acylant substitué par un groupe hydrocarbyle sont présents dans de telles quantités qu'un produit de la réaction de ces derniers, en l'absence du composant (c), contiendrait une fonction azote réactive résiduelle ;
dans lequel la quantité du composant (c) est suffisante pour réagir avec au moins une partie de ladite fonction azote réactive résiduelle ; et
dans lequel l'anhydride de l'acide maléique est ajouté au mélange réactionnel à une température inférieure à 140°C et est fourni de manière à réagir simultanément avec la réaction de l'amine et de l'agent acylant hydrocarbyle pour former le dispersant.

**2.** Procédé selon la revendication 1 dans lequel le dispersant est un dispersant succinimide.

**3.** Procédé selon la revendication 2 dans lequel le dispersant succinimide est **caractérisé par** la présence de 1,3 à 10 groupes succiniques pour chaque poids équivalent de groupe substituant.

**4.** Procédé selon l'une quelconque des revendications précédentes dans lequel l'agent acylant utilisé pour préparer le dispersant est dérivé d'un polyalkène **caractérisé par** une valeur $M_w/M_n$ comprise entre 1 et 4.

**5.** Procédé selon l'une quelconque des revendications précédentes dans lequel l'amine est une polyamine.

**6.** Procédé selon l'une quelconque des revendications précédentes dans lequel on fait réagir de 0,01 à 0,5 moles d'anhydride de l'acide maléique par équivalent de dispersant.

**7.** Procédé selon la revendication 1 dans lequel :

- le rapport des nombres totaux de moles d'atomes d'azote amine dans l'amine (a) par rapport aux moles des groupes carboxyle dans l'agent acylant (b), tel que chargé dans le mélange réactionnel formant ledit dispersant, est compris entre 1,0 et 1,3 ; et

- le rapport molaire de l'anhydride (c) chargé dans le mélange réactionnel par rapport aux moles des atomes d'azote réactif restant dans l'amine (b) lors de la réaction avec (a), tel que

déterminé par calcul de l'indice de basicité totale (TBN) d'un produit réactionnel correspondant de (a) et de (b) en l'absence du composant (c), est compris entre 0,05 et 0,2.

**8.** Procédé selon la revendication 1 dans lequel :

- le rapport des nombres totaux de moles des atomes d'azote amine dans l'amine (a) par rapport aux moles des groupes carboxyle dans l'agent acylant (b), tel que chargé dans le mélange réactionnel formant ledit dispersant, est compris entre 1,3 et 2,3 ; et

- le rapport molaire de l'anhydride (c) chargé dans le mélange réactionnel par rapport aux moles d'atomes d'azote réactif restant dans l'amine (b) lors de la réaction avec (a), tel que déterminé par calcul du TBN d'un produit réactionnel correspondant de (a) et de (b) en l'absence du composant (c), est compris entre 0,1 et 0,4.